# EUROPEAN PATENT APPLICATION

(11) **EP 2 983 430 A1**
(43) Date of publication of application: **10.02.2016**
(21) Application number: 14778716.2
(22) Date of filing: 13.02.2014
(51) Int. Cl.: H04W 72/04, H04L 27/26

(54) **METHOD AND DEVICE FOR TRANSMISSION AND RECEIVING PROCESSING OF DATA CHANNEL**

(30) Priority: 03.04.2013 CN 201310116112
(71) Applicant: ZTE Corporation, 518057 Shenzhen City, Guangdong Province (CN)
(72) Inventor: LI, Xincai, Shenzhen Guangdong Province 518057 (CN); DAI, Bo, Shenzhen Guangdong Province 518057 (CN); XIA, Shuqiang, Shenzhen Guangdong Province 518057 (CN); SHI, Jing, Shenzhen Guangdong Province 518057 (CN)
(74) Representative: Novagraaf Technologies
(86) International application number: PCT/CN2014/072015
(87) International publication number: WO 2014/161389

(57) **Abstract**

Provided are a transmitting or receiving processing method and apparatus for data channel. The transmitting method applied to a base station comprises: acquiring data to be transmitted; transmitting, on multiple sub-frames, the data to be transmitted born by the data channel, wherein the data channel at least comprises two parts, and the number of pilot frequency symbols contained in the first part is larger than that in the second part; and/or, the first part is used for transmitting auxiliary demodulation data and the second part is used for transmitting target data. The technical problems that the accuracy of channel estimation is poor, the coverage performance is low and the like when the original uplink and downlink data transmission way is adopted are solved. The accuracy of coherence demodulation of the target data at a receiving end is ensured, and the coverage performance of the data channel is improved.

## Description

### Technical Field

The present disclosure relates to the field of communications, in particular to a transmitting or receiving processing method and apparatus for a data channel.

### Background

Machine Type Communication (MTC) User Equipment (UE), which is also called Machine to Machine (M2M) user communication device, is a main application form of the existing Internet of things. Smart metering is one of the most typical applications of the MTC device, and most of the smart metering MTC devices are fixedly installed in an environment of low coverage performance, such as a basement. To ensure the normal communication between the MTC device and a base station system, additional devices, such as relay and station usually need to be deployed, which greatly increases the deployment cost of an operator. Therefore, the Vodafone and other companies make a requirement on improving the coverage of the smart metering MTC devices without adding additional deployment in the technical solution RP-121282 of the 3GPP RAN.

The smart metering MTC device mainly sends a small data packet so that it has a low requirement on the data rate and can tolerate a large data transmission delay. The smart metering MTC device is fixed in location and very low in mobility, therefore, the coverage of the data channel can be improved by multiple repeated transmissions in a time domain. However, due to the severe environment and very low Signal to Interference and Noise Ratio (SINR) of the MTC device, if the original uplink and downlink data channel transmission way in the LTE/LTE_A is adopted, namely, the data channel is usually transmitted on only one sub-frame, and channel estimation is carried out for each sub-frame separately through scattered reference signals, as a result, the channel estimation may be inaccurate, a channel coefficient, frequency offset information and some timing advance information may face serious challenges, and the reliability of coherence demodulation of the data of a receiving end may be affected.

Therefore, to solve the problem of bottlenecks of service channel demodulation performance caused by the reduction of pilot frequency performance, it is necessary to design an enhanced transmitting method for a data channel, so as to ensure the accuracy of channel estimation under a low Signal-Noise Ratio (SNR) condition, implement correct coherence demodulation of transmitted data at the receiving end, enhance the coverage and improve the performance of data transmission between the MTC device and a network side in a severe environment.

To solve the problem in the related arts, there is still no effective solution yet.

### Summary

To solve the technical problems in the related arts that the accuracy of channel estimation is poor, the coverage performance is low and the like if the original uplink and downlink data transmission way is adopted, embodiments of the present disclosure provide a transmitting or receiving processing method and apparatus for a data channel, in order to solve at least one of the above problems.

According to an embodiment of the present disclosure, a transmitting method for a data channel is provided, which is applied to a base station and includes: data to be transmitted is acquired; the data to be transmitted born by the data channel is transmitted on multiple sub-frames, wherein the data channel at least includes two parts, and the number of pilot frequency symbols contained in the first part is larger than the number of pilot frequency symbols contained in the second part; and/or, the first part is used for transmitting auxiliary demodulation data and the second part is used for transmitting target data.

In an example embodiment, in the first part, the proportion of resources occupied by pilot frequency and data is not less than a preset threshold; and in the second part, the proportion of resources occupied by pilot frequency and data is less than the preset threshold.

In an example embodiment, the proportion of resources occupied by the pilot frequency and the data included in the first part and/or the proportion of resources occupied by the pilot frequency and the data included in the second part is determined in one of the following ways: a signalling configuration way, a predefined way, and a way of determination according to a Physical Random Access Channel (PRACH) format.

In an example embodiment, a frequency domain location of the auxiliary demodulation data is indicated by a signalling or is determined according to a frequency domain location of the target data.

In an example embodiment, the number of Orthogonal Frequency Division Multiplexing (OFDM) symbols for bearing pilot frequency included in the second part is 0; or, N sub-frames include k (0<k<=N) OFDM symbols for bearing pilot frequency, where N is the number of sub-frames for bearing the second part; or, each sub-frame in N sub-frames includes two OFDM symbols for bearing pilot frequency; or, each sub-frame in N sub-frames includes four OFDM symbols for bearing pilot frequency.

In an example embodiment, pilot frequency symbols of the data channel are transmitted in a time division multiplexing way.

In an example embodiment, the pilot frequency symbols of the data channel are transmitted in the time domain multiplexing way according to one of the following ways: each OFDM symbol corresponds to one pilot frequency sequence; each time slot corresponds to one pilot frequency sequence; and one or more sub-frames correspond to one pilot frequency sequence.

In an example embodiment, the auxiliary demodulation data is determined in the following way: a transmitting end and a receiving end appointing to adopt designated information as the auxiliary demodulation data.

In an example embodiment, the auxiliary demodulation data includes at least one of the followings: uplink and downlink pilot frequency sequences, a System Information Block (SIB)/ Main Information Block (MIB), a synchronous signal, PRACH information, scheduling request information and a predefined information block.

In an example embodiment, multiple sub-frames for bearing the first part bear the same auxiliary demodulation data; or, each sub-frame in the multiple sub-frames for bearing the first part bears one part of the auxiliary demodulation data.

In an example embodiment, a frequency domain location of the target data is indicated by a signalling or is determined according to a frequency domain location for transmitting the auxiliary demodulation data.

In an example embodiment, before the data to be transmitted born by the data channel is transmitted on multiple sub-frames, the method further includes: the data to be transmitted born by the data channel is mapped to continuous subcarriers or subcarriers at an equal interval.

In an example embodiment, a frequency domain location of each sub-frame in the multiple sub-frames is determined in one of the following ways: a predefined way, and a frequency hopping way indicated by a signalling.

In an example embodiment, the frequency hopping corresponding to the frequency hopping way is frequency hopping of K bound sub-frames, where 1<K<N/2, K is an integer and N is the number of sub-frames for bearing the second part.

In an example embodiment, the number of sub-frames contained in the first part and the number of sub-frames contained in the second part are determined in one of the following ways: the numbers are notified by a signalling or determined according to a PRACH.

According to another embodiment of the present disclosure, a receiving processing method for a data channel is provided, which is applied to a terminal and includes: a configuration rule for the data channel is acquired, wherein the configuration rule includes: the data channel at least contains two parts, the number of pilot frequency symbols contained in the first part is larger than the number of pilot frequency symbols contained in the second part; and/or, the first part is used for transmitting auxiliary demodulation data and the second part is used for transmitting target data; and data to be transmitted born by the data channel is received on multiple sub-frames according to the configuration rule.

In an example embodiment, in the first part, the proportion of resources occupied by pilot frequency and data is not less than a preset threshold; and in the second part, the proportion of resources occupied by pilot frequency and data is less than the preset threshold.

In an example embodiment, the proportion of resources occupied by the pilot frequency and the data included in the first part and/or the proportion of resources occupied by the pilot frequency and the data included in the second part is determined in one of the following ways: a signalling configuration way, a predefined way, and a way of determination according to a PRACH format.

In an example embodiment, a frequency domain location of the auxiliary demodulation data is indicated by a signalling or is determined according to a frequency domain location of the target data.

In an example embodiment, the number of OFDM symbols for bearing pilot frequency included in the second part is 0; or, N sub-frames include k (0<k<=N) OFDM symbols for bearing pilot frequency, where N is the number of sub-frames for bearing the second part; or, each sub-frame in N sub-frames includes two OFDM symbols for bearing pilot frequency; or, each sub-frame in N sub-frames includes four OFDM symbols for bearing pilot frequency.

In an example embodiment, pilot frequency symbols of the data channel are transmitted in a time division multiplexing way.

In an example embodiment, the pilot frequency symbols of the data channel are transmitted in the time domain multiplexing way according to one of the following ways: each OFDM symbol corresponds to one pilot frequency sequence; each time slot corresponds to one pilot frequency sequence; and one or more sub-frames correspond to one pilot frequency sequence.

In an example embodiment, the auxiliary demodulation data is determined in the following way: a transmitting end and a receiving end appointing to adopt designated information as the auxiliary demodulation data.

In an example embodiment, the auxiliary demodulation data includes at least one of the followings: uplink and downlink pilot frequency sequences, an SIB/MIB, a synchronous signal, PRACH information, scheduling request information and a predefined information block.

In an example embodiment, multiple sub-frames for bearing the first part bear the same auxiliary demodulation data; or, each sub-frame in the multiple sub-frames for bearing the first part bears one part of the auxiliary demodulation data.

In an example embodiment, a frequency domain location of the target data is indicated by a signalling or is determined according to a frequency domain location for transmitting the auxiliary demodulation data.

In an example embodiment, before the data born by the data channel is transmitted on multiple sub-frames, the method further includes: mapping the data born by the data channel to continuous subcarriers or subcarriers at an equal interval.

In an example embodiment, a frequency domain location of each sub-frame in the multiple sub-frames is determined in one of the following ways: a predefined way, and a signalling-indicated frequency-hopping way.

In an example embodiment, the frequency hopping corresponding to the frequency hopping way is frequency hopping of K bound sub-frames, where 1<K<N/2, K is an integer and N is the number of sub-frames for bearing the second part.

In an example embodiment, the number of sub-frames contained in the first part and the number of sub-frames contained in the second part are determined in one of the following ways: the numbers are notified by a signalling or determined according to a PRACH.

In an example embodiment, the data born by the data channel includes: uplink data or downlink data.

According to another embodiment of the present disclosure, a transmitting apparatus for a data channel is provided, which is applied to a base station and includes: an acquiring component, which is configured to acquire data to be transmitted, and a transmitting component, which is configured to transmit, on multiple sub-frames, the data to be transmitted born by the data channel, wherein the data channel at least includes two parts, and the number of pilot frequency symbols contained in the first part is larger than the number of pilot frequency symbols contained in the second part; and/or, the first part is used for transmitting auxiliary demodulation data and the second part is used for transmitting target data.

According to another embodiment of the present disclosure, a receiving processing apparatus for a data channel is provided, which is applied to a terminal and includes: an acquiring component, which is configured to acquire a configuration rule for the data channel, wherein the configuration rule includes: the data channel at least contains two parts, the number of pilot frequency symbols contained in the first part is larger than the number of pilot frequency symbols contained in the second part; and/or, the first part is used for transmitting auxiliary demodulation data and the second part is used for transmitting target data; and a receiving component, which is configured to receive, on multiple sub-frames according to the configuration rule, data to be transmitted born by the data channel.

Through the embodiments of the present disclosure, the data channel is divided into two parts, and the channel estimation information of the first part is compensated and calibrated according to that of the second part or the data transmitted by the second part is demodulated according to the channel estimation information of the first part, the technical problems that the accuracy of channel estimation is poor, the coverage performance is low and the like when the original uplink and downlink data transmission way is adopted are solved, the accuracy of coherence demodulation of the target data is ensured for the receiving end, and the coverage performance of the data channel is improved.

### Brief Description of the Drawings

The drawings illustrated here are to provide further understanding of the present disclosure and constitute one part of the application, and the exemplary embodiments of the present disclosure and the explanations thereof are intended to explain the present disclosure, instead of improperly limiting the present disclosure. In the drawings,
Fig. 1 is a flowchart of a transmitting method for a data channel according to embodiment 1 of the present disclosure;
Fig. 2 is a block diagram showing the structure of a transmitting apparatus for a data channel according to embodiment 1 of the present disclosure;
Fig. 3 is a flowchart of a receiving processing method for a data channel according to embodiment 1 of the present disclosure;
Fig. 4 is a block diagram showing the structure of a receiving processing apparatus for a data channel according to embodiment 1 of the present disclosure;
Fig. 5 is a diagram showing the distribution of pilot frequency and data in each part of a PUSCH in an FDD system according to embodiment 2 of the present disclosure;
Fig. 6 is a diagram showing the uniform distribution of pilot frequency and data of a PUSCH in a TDD system according to embodiment 3 of the present disclosure;
Fig. 7 is a diagram showing the distribution of pilot frequency and data of a PDSCH according to embodiment 4 of the present disclosure;
Fig. 8 is a diagram showing a case where the frequency domain locations of auxiliary demodulation data and target data are the same according to embodiment 5 of the present disclosure;
Fig. 9 is a diagram showing a case where auxiliary demodulation data covers the frequency domain range of multiple sub-frames where the target data is located according to embodiment 6 of the present disclosure;
Fig. 10 is a diagram showing a case where auxiliary demodulation data does not implement frequency hopping and target data implements frequency hopping of multiple bound sub-frames according to embodiment 7 of the present disclosure;
Fig. 11 is a diagram showing a case where auxiliary demodulation data and target data adopt the same intra-slot frequency hopping according to embodiment 8 of the present disclosure;
Fig. 12 is a diagram showing the resource mapping, for uplink data channel transmission, in one sub-frame with normal Cyclic Prefixes (CP) at an equal interval of three sub-carriers according to embodiment 10 of the present disclosure;
Fig. 13 is a diagram showing the resource mapping, for downlink data channel transmission, in one sub-frame with Extended CP at an equal interval of six sub-carriers according to embodiment 11 of the present disclosure;
Fig. 14 is a diagram showing a location relationship between a first part and a second part according to an embodiment of the present disclosure; and
Fig. 15 is a diagram showing another location relationship between a first part and a second part according to an embodiment of the present disclosure.

### Detailed Description of the Embodiments

The present disclosure will be described below in combination with the drawings and embodiments in detail. It should be noted that, in case of no conflict, the embodiments of the application and features therein can be combined with one another.

### Embodiment 1

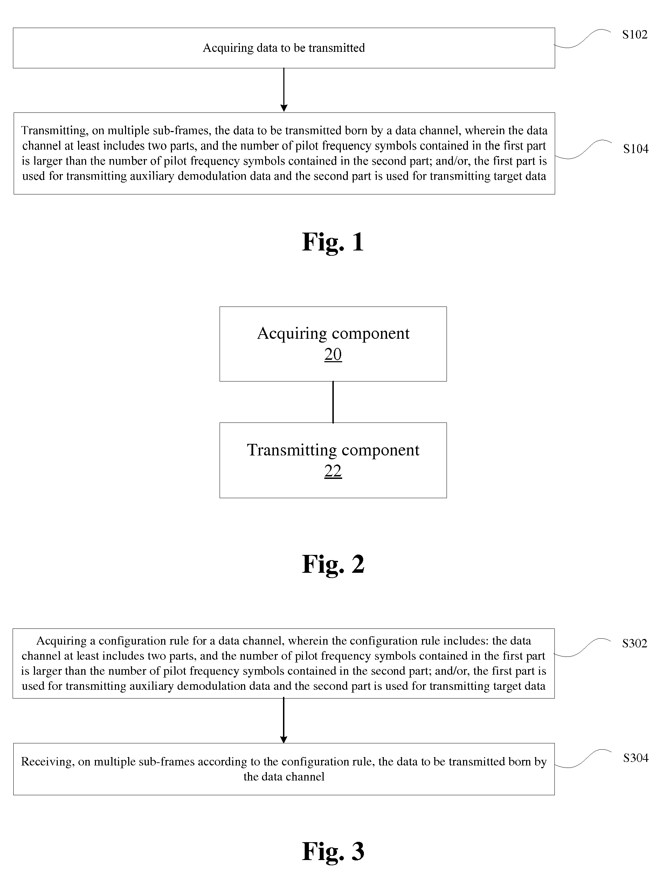

Fig. 1 is a flowchart of a transmitting method for a data channel according to an embodiment of the present disclosure. The method is applied to a base station, as shown in Fig. 1, the method includes:
Step S102: Data to be transmitted is acquired.
Step S104: The data to be transmitted born by the data channel is transmitted on multiple sub-frames, wherein the data channel at least includes two parts, and the number of pilot frequency symbols contained in the first part is larger than the number of pilot frequency symbols contained in the second part; and/or, the first part is used for transmitting auxiliary demodulation data and the second part is used for transmitting target data.

Through the steps, in one aspect, by transmitting uplink and downlink data channels on multiple sub-frames, penetration loss is compensated and the coverage performance of a service channel is improved; in another aspect, by the accurate channel information provided by the first part and the further supplement of pilot frequency channel estimation of the second part, the accuracy of channel estimation is ensured in a low Signal to Interference plus Noise Ratio (SINR), and correct data exchange and transmission between a transmitting end and a receiving end is ensured, so that the method is suitable for the transmission of the data channel when the movement speed of a terminal is low, i.e., the channel status information is relatively stable.

In Step S104, the first part and the second part may be applied in the following manner: first estimation information is compensated and calibrated by second estimation information which is obtained by performing channel estimation on the pilot frequency of the second part, and the first estimation information is obtained by performing channel estimation using multiple pilot frequency symbols or the auxiliary demodulation data of the first part; and/or, the target data transmitted by the second part is subjected to coherence demodulation according to the first estimation information obtained by performing channel estimation on the first part. Here, the first part is only used for transmitting the auxiliary demodulation data, and the second part is only used for transmitting the target data.

In the embodiment, each of the first and the second parts includes one or more sub-frames, and generally, the first part contains a larger number of sub-frames than the second part. The specific number of the sub-frames contained in each part is determined according to PRACH information or determined by a signalling.

The specific implementation process is described as follows.

Firstly, a base station sends, to a terminal, configuration information for uplink or downlink data channel transmission, wherein the configuration information at least includes one of the following information:
Information 1: the number of sub-frames contained in each part of the data channel.

In an example embodiment, the base station may configure the information 1 according to the severe degree of the environment where each user locates and the required coverage enhancement magnitude.

When the number of sub-frames contained by each part of the data channel is determined according to the PRACH information, the base station does not need to send the configuration information.

Information 2: the number and specific location of OFDM symbols occupied by the pilot frequency and data of each part.

In an example embodiment, the number of pilot frequency symbols contained in the first part is larger than the number of pilot frequency symbols contained in the second part.

In the first part, the pilot frequency is distributed in a high density and the proportion of resources occupied by the pilot frequency and the data is more than or equal to a preset threshold L. In the second part, the pilot frequency is distributed in a low density, and the proportion of the resources occupied by the pilot frequency and the data is less than the preset threshold L. Namely, the proportion of resources occupied by the pilot frequency and the data in the first part is more than that in the second part. The threshold L may be, e.g., one of 1, 1/2, 1/3, 1/4, and 1/5. The proportion of resources occupied by the pilot frequency and the data included in the first part and/or the proportion of resources occupied by the pilot frequency and the data included in the second part may be determined in one of the following ways: a signalling configuration way, a pre-defined way and a PRACH format. When the proportions are determined according to the PRACH format, the following way may be adopted: a corresponding relationship between PRACH formats and proportion values is set in advance, and the proportions are determined according to the corresponding relationship.

In an example embodiment, the pilot frequency symbols of the data channel are multiplexed in a time domain way, wherein each OFDM symbol corresponds to one pilot frequency sequence, or, one time slot corresponds to one pilot frequency sequence, or, one or more sub-frames correspond to one pilot frequency sequence.

In an example embodiment, the pilot frequency may be a Zadoff-Chu sequence or a CAZAC sequence.

In an example embodiment, the number of OFDM symbols bearing the pilot frequency included in the second part is 0, or, multiple sub-frames (N sub-frames here) for bearing the second part include k (0<k<=N) OFDM symbols for bearing the pilot frequency; or, each sub-frame in N sub-frames includes two OFDM symbols (uplink) for bearing the pilot frequency; or, each sub-frame in N sub-frames includes four OFDM symbols (downlink) for bearing the pilot frequency.

Information 3: auxiliary demodulation data: a sending end and a receiving end may appoint to take specified information as the auxiliary demodulation data.

In an example embodiment, the auxiliary demodulation data may be the information already known by the receiving end, including, existing pilot frequency (uplink and downlink pilot frequency sequences), or the data already known by the receiving end and appointed by the sending end and the receiving end.

In an example embodiment, the auxiliary demodulation data is at least one of the following: PRACH information (such as a preamble sequence adopted by random access), a synchronous signal (such as a sequence adopted by a synchronous channel, a Demodulation Reference Signal (DMRS), and a Sounding Reference Signal (SRS)), scheduling request information (sequence adopted by a scheduling request), an SIB/MIB, and a pre-defined information block.

In an example embodiment, the length of the auxiliary demodulation data is indicated by a signalling or is determined according to the size of frequency domain resources of the target data of the second part.

In an example embodiment, multiple sub-frames for bearing the first part may bear the same auxiliary demodulation data; or, each sub-frame of the multiple sub-frames for bearing the first part may bear one part of the auxiliary demodulation data.

In an example embodiment, the frequency domain location of the auxiliary demodulation data is indicated by a signalling or is determined according to the frequency domain location of the target data (i.e., the data of the second part).

Correspondingly, the frequency domain location of the target data is indicated by a signalling or is determined according to the frequency domain location of the auxiliary demodulation data.

Optionally, when different users occupy the same data transmission resource, the auxiliary demodulation data adopted is orthogonal.

Information 4: some data scheduling information of uplink/downlink (UL/DL) grant,

such as, the frequency domain location of each sub-frame of the second part, the size of frequency domain resources, and a Modulation and Coding Scheme (MCS) level.

In an example embodiment, each sub-frame of the second part bears the same data packet.

Optionally, the size of each data packet is a fixed value.

In an example embodiment, the frequency domain location of each sub-frame of the second part is the same; or,

a pre-defined way or a frequency hopping way indicated by a signalling is adopted.

In an example embodiment, the frequency hopping is frequency hopping of multiple bound sub-frames.

In an example embodiment, before the data born by the data channel is transmitted on multiple sub-frames according to a configuration rule, the data born by the data channel may be mapped to continuous sub-carriers or sub-carriers at an equal interval; for example, the pilot frequency, the auxiliary demodulation data and the transmitted target data are mapped to the continuous sub-carriers or the sub-carriers at an equal interval.

In an example embodiment, the equal interval is 2, 3, 4 or 6.

The information is sent to the terminal by the base station through a physical control signalling or an RRC signalling.

Then, the terminal transmits an uplink data channel or receives a downlink data channel according to the received scheduling information and related configuration for the transmission of the data channel.

In addition, resource mapping and transmission may be performed on the data channel according to a pre-defined way. Namely, the number of sub-frames and the proportion of the pilot frequency and the data contained in each part are fixed and do not need to be configured.

After the receiving end receives the data channel, the channel condition of one sub-frame of the data channel is estimated according to the pilot frequency information or the auxiliary demodulation data contained in the first part (if the first part contains two or more sub-frames, joint channel estimation is carried out), then, each sub-frame for transmitting the target data is subjected to coherence demodulation according to the estimation information and the same data packets are accumulated. If the second part contains pilot frequency, channel estimation is carried out according to the pilot frequency information, wherein the estimation information can compensate the estimation result of the first part, thus, the accuracy of the channel estimation for each sub-frame can be ensured. In this way, the difference between a theoretical value and a coverage gain brought by time domain repetition which is caused by inaccurate channel estimation in practice can be reduced, and the coverage performance of a service channel can meet the requirement.

In the embodiment, a frequency domain location of each sub-frame in the multiple sub-frames is determined in one of the following ways: a pre-defined way, a signalling-indicated frequency hopping way. The frequency hopping corresponding to the frequency hopping way is frequency hopping of K bound sub-frames, where 1 <K<2/N, N is the number of the sub-frames for bearing the second part.

A transmitting apparatus for a data channel is further provided in an embodiment. The apparatus is applied to a base station and is configured to implement the embodiments and the example embodiments above, which has been described so as not to be described any more. The components involved in the apparatus are described below. As below, the term "component" can implement the combination of software and/or hardware of predetermined functions. Although the apparatus described in the following embodiments is preferably implemented by software, the implementation of hardware or the combination of the software and hardware can also be composed. Fig. 2 is a block diagram showing the structure of a transmitting apparatus for a data channel according to embodiment 1 of the present disclosure. As shown in Fig. 2, the apparatus includes:
an acquiring component 20, which is coupled with a transmitting component 22 and is configured to acquire data to be transmitted;
the transmitting component 22 is configured to transmit, on multiple sub-frames, the data to be transmitted born by a data channel, wherein the data channel at least includes two parts, and the number of pilot frequency symbols contained in the first part is larger than the number of pilot frequency symbols contained in the second part; and/or, the first part is used for transmitting auxiliary demodulation data and the second part is used for transmitting target data.

Through the function implemented by each component, the coverage performance of the service channel can be improved, and the accuracy of channel estimation in a low SINR is ensured.

It should be noted that the function implemented by each component can be implemented by a corresponding processor. For example, a processor includes the acquiring component 20 and the transmitting component 22; or, an apparatus includes the acquiring component 20 which is located in a first processor, and the transmitting component 22 which is located in a second processor.

It should be noted that the apparatus in the embodiment may be applied to the transmission for uplink data and downlink data; and under the circumstance, the apparatus may include the following two parts:
a sending apparatus, which is configured to send uplink and downlink service data according to the transmitting method for the data channel; and a receiving apparatus, which is configured to receive the uplink and downlink service data according to the transmitting method for the data channel. Furthermore, the channel is subjected to channel estimation and the target data is subjected to coherence demodulation according to the data transmitted by the first part.

A terminal side is further described in an embodiment.

Fig. 3 is a flowchart of a receiving processing method for a data channel according to embodiment 1 of the present disclosure. As shown in Fig. 3, the method is applied to a terminal and includes:
Step S302: A configuration rule for the data channel is acquired, wherein the configuration rule includes: the data channel at least includes two parts, and the number of pilot frequency symbols contained in the first part is larger than the number of pilot frequency symbols contained in the second part; and/or, the first part is used for transmitting auxiliary demodulation data and the second part is used for transmitting target data.
Step S304: Data to be transmitted born by the data channel is received on multiple sub-frames according to the configuration rule.

In the first part, the proportion of resources occupied by pilot frequency and data is not less than a preset threshold; and in the second part, the proportion of resources occupied by pilot frequency and data is less than the preset threshold.

The proportion of resources occupied by the pilot frequency and the data included in the first part and/or the proportion of resources occupied by the pilot frequency and the data included in the second part is determined in one of the following ways: a signalling configuration way, a predefined way, and a PRACH format.

A frequency domain location of the auxiliary demodulation data is indicated by a signalling or is determined according to a frequency domain location of the target data.

The number of OFDM symbols for bearing pilot frequency included in the second part is 0; or, N sub-frames include k (0<k<=N) OFDM symbols for bearing pilot frequency, where N is the number of sub-frames for bearing the second part; or, each sub-frame in the N sub-frames includes two OFDM symbols for bearing pilot frequency; or, each sub-frame in the N sub-frames includes four OFDM symbols for bearing pilot frequency.

In an example embodiment, pilot frequency symbols of the data channel are transmitted in a time division multiplexing way. Optionally, the pilot frequency symbols of the data channel are transmitted in the time domain multiplexing way according to one of the following ways: each OFDM symbol corresponds to one pilot frequency sequence; each time slot corresponds to one pilot frequency sequence; and one or more sub-frames correspond to one pilot frequency sequence.

The auxiliary demodulation data is determined in the following way: a transmitting end and a receiving end appointing to adopt designated information as the auxiliary demodulation data.

The auxiliary demodulation data includes at least one of the followings: uplink and downlink pilot frequency sequences, an SIB/MIB, a synchronous signal, PRACH information, scheduling request information and a predefined information block.

Multiple sub-frames for bearing the first part bear the same auxiliary demodulation data; or, each sub-frame in the multiple sub-frames for bearing the first part bears one part of the auxiliary demodulation data.

A frequency domain location of the target data is indicated by a signalling or is determined according to a frequency domain location for transmitting the auxiliary demodulation data.

Before the data born by the data channel is transmitted on multiple sub-frames, the data born by the data channel is mapped to continuous subcarriers or subcarriers at an equal interval.

A frequency domain location of each sub-frame in the multiple sub-frames is determined in one of the following ways: a predefined way, and a signalling-indicated frequency-hopping way.

The frequency hopping corresponding to the frequency hopping way is frequency hopping of K bound sub-frames, where 1<K<N/2, K is an integer and N is the number of sub-frames for bearing the second part.

The number of sub-frames contained in each of the first and the second parts is determined in one of the following ways: the number is notified by a signalling, or, the number is determined according to the PRACH.

The data born by the data channel includes: uplink data or downlink data.

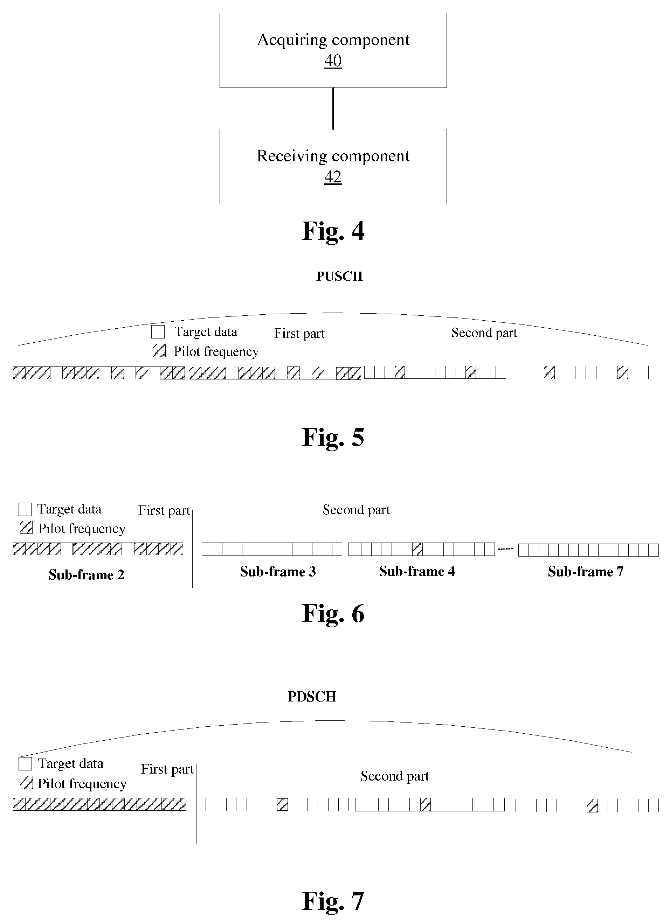

Fig. 4 is a block diagram showing the structure of a receiving processing apparatus for a data channel according to embodiment 1 of the present disclosure. The apparatus is applied to a terminal and includes:
an acquiring component 40 which is coupled with a receiving component 42 and is configured to acquire a configuration rule for the data channel, wherein the configuration rule includes: the data channel at least includes two parts, and the number of pilot frequency symbols contained in the first part is larger than the number of pilot frequency symbols contained in the second part; and/or, the first part is used for transmitting auxiliary demodulation data and the second part is used for transmitting target data; and
the receiving component 42, which is configured to receive, on multiple sub-frames according to the configuration rule, data to be transmitted born by the data channel.

To be understood better, the technical solution described in embodiment 1 is further described below in combination with embodiments 2-10 and the related drawings.

In the embodiment, the distribution of pilot frequency and data of multiple sub-frames contained in the data channel in a Frequency Division Duplexing (FDD) system is described in detail. The channel estimation still adopts the original pilot frequency.

The frequency pilot of the first part occupies a larger number of OFDM symbols than the second part. Furthermore, in the first part, the pilot frequency is distributed in a high density, namely, the pilot frequency occupies much more OFDM symbols or resource elements than the data; and in the second part, the pilot frequency is distributed in a low density, namely, the pilot frequency occupies much less OFDM symbols or resource elements than the data.

A base station may notify the OFDM symbols or resource elements occupied by the data of the first part and the symbols or resource elements occupied by pilot frequency of the second part, thus, signalling overhead can be saved. Furthermore, the proportion of resources occupied by the pilot frequency and the data of each part may be given in a pre-defined way or a signalling configuration way, then, the pilot frequency and the data are distributed uniformly.

For example, for an uplink data channel, the proportion of OFDM symbols occupied by the pilot frequency and the data of the second part is 1:6, 1:12 or a smaller one. The proportion of the first part is 4:3 or a higher one. The data and the pilot frequency symbols are placed alternately. The number of OFDM symbols for bearing the pilot frequency included in the second part is 0, or, N sub-frames include 1, 2, 3, ...... OFDM symbols for bearing the pilot frequency in total, or, each sub-frame of the N sub-frames still includes two OFDM symbols bearing the pilot frequency. The indexes of the OFDM symbols occupied by the pilot frequency symbols are already known by the receiving end, for example, the OFDM symbols are placed at locations at an equal interval (see Fig. 6) or, locations at a different interval (see Fig. 5).

The distribution of the pilot frequency and the data at the physical resources or one Resource Block (RB) of a user of an uplink data channel, e.g., a Physical Uplink Share Channel (PUSCH) may be as shown in Fig. 5. In the embodiment, the sub-frame is configured with a normal CP, i.e., each sub-frame contains 14 OFDM symbols. The first part includes two sub-frames, and the data in each sub-frame only occupies the 4th, 8th, 10th and 12th OFDM symbols; and the second part also includes two sub-frames, and each sub-frame still adopts the original structure and includes two OFDM symbols for bearing the pilot frequency. In addition, the pilot frequency adopts a time division multiplexing way, each OFDM symbol corresponds to one pilot frequency sequence, each pilot frequency sequence is obtained by the cyclic shift of a same or a different root sequence, and the root sequence is a Zadoff-Chu sequence or a CAZAC sequence.

After receiving a PUSCH containing four continuous sub-frames, the base station carries out joint channel estimation according to the pilot frequency of the former two sub-frames to estimate the channel coefficient of one sub-frame, and then performs channel estimation on each of the following two sub-frames according to the pilot frequency of the sub-frame; and the demodulation of the target data refers to the results of the two channel estimations.

### Embodiment 2

In the embodiment, the distribution of pilot frequency and target data of a PUCSH in a Time Division Duplexing (TDD) system is described in detail.

For the uplink and downlink sub-frame configurations 0-7 of the TDD system, uplink data can be transmitted on multiple continuous or discontinuous sub-frames by the transmitting method provided by the embodiments of the present disclosure.

For example, for the uplink and downlink sub-frame configuration 0, the pilot frequency and data of the entire user bandwidth may be transmitted by the structure in Fig. 6. The first part of the uplink data channel includes one sub-frame, namely, it is mapped to the sub-frame 2 of a radio frame, and the ratio of the pilot frequency to the data is 7:1; and two data OFDM symbols are uniformly distributed at an equal interval. The second part includes 3 sub-frames, namely, it is mapped to the sub-frames 3, 4 and 7 of the radio frame. There is only one pilot frequency, which is located in the middle of the sub-frame 4. Of course, the data channel may be mapped to multiple continuous or discontinuous radio frames. In addition, the pilot frequency adopts a time division multiplexing way, each OFDM symbol corresponds to one pilot frequency sequence, each pilot frequency sequence is obtained by the cyclic shift of a same or different root sequence, and the root sequence is a Zadoff-Chu sequence or a CAZAC sequence. After receiving a PUSCH containing four sub-frames, the base station estimates the channel coefficient of one sub-frame according to the actual data received at the first sub-frame and an already known pilot frequency. Then, the channel coefficient is used for the coherence demodulation of the target data of each sub-frame.

### Embodiment 3

In the embodiment, the specific way for transmitting a downlink data channel in an FDD system by the method provided by the embodiments of the present disclosure is described.

A Physical Downlink Shared Channel (PDSCH) is transmitted in the transmission way in Fig. 7. The PDSCH is transmitted on four sub-frames, wherein control information occupies 0 OFDM symbol, and the four sub-frames have the same frequency domain location. The downlink data channel is divided into two parts: the first part includes one sub-frame, all the data symbols of the sub-frame transmit a pilot frequency DMRS or a CRS (Cell-specific Reference Signal), each OFDM symbol corresponds to one sequence, or, each time slot corresponds to one sequence, or, the entire sub-frame transmits a same sequence. The sequence may have various time domain lengths, but the length of the sequence is determined according to the size of the allocated bandwidth. For example, when the allocated frequency domain resources are six RBs, if the original continuous sub-carrier mapping way is still adopted, the length of the sequence is 72. The second part includes three sub-frames and mainly transmits target data; the intermediate OFDM symbol of each sub-frame is used for transmitting the pilot frequency, and the other symbols are used for transmitting the target data; in addition, each of the three sub-frames bears the same data packet.

Before sending the downlink data channel, the base station sends some transmission configuration information of the channel through a physical signalling or a high-layer signalling. A terminal receives the downlink data channel according to the information.

The terminal carries out channel estimation according to the received actual data of the first sub-frame, and then the estimation result is used for assisting the demodulation of the target data of the following three sub-frames; the pilot frequency symbol contained in each of the following three sub-frames may be used for compensating and calibrating the previous estimation result so that the estimation result of the current frame is more accurate. Then, the data obtained by demodulating the three sub-frames separately is accumulated to achieve the gain of time domain repetition and improve the coverage performance of the data channel.

### Embodiment 4

In the embodiment, the circumstances that a first part in an uplink data channel transmits auxiliary demodulation data (known data of a receiving end, like a pilot frequency), and a second part transmits target data according to the transmitting method for a data channel provided by the embodiments of the present disclosure are described in detail in a TDD system.

The auxiliary demodulation data transmitted by the first part is a known sequence or a series of information bits appointed by a sending end and a receiving end, such as a PRACH preamble sequence, a DMRS, a Zadoff-Chu sequence used by an SRS, or, a CAZAC sequence used by an SR, or a pre-defined information block.

The length of the auxiliary demodulation data is determined implicitly by the size of resources allocated for transmitting the target data. For example, if two PRBs are allocated to a UE and a continuous sub-carrier mapping way is adopted, the length of the sequence is 24; and if an interval sub-carrier mapping way is adopted, and the interval is k, then the length of the sequence is 24/k.

The specific frequency domain location is determined implicitly according to the frequency domain location of each sub-frame of the second part, at least containing the frequency domain range occupied by the target data. To save resources, the initial position of the frequency domain is min(f1, f2, f3......fn), where f1, f2, f3......fn are the frequency domain initial positions of the target data at each sub-frame of the second part respectively. The ending position is max(F1, F2, F3......Fn), where F1, F2, F3...... Fn are the frequency domain end positions of the target data at each sub-frame of the second part respectively.

The time domain length of the auxiliary demodulation data is one or more sub-frames, and the number of the one or more sub-frames is indicated by a signalling. There are two ways when the time domain length is multiple sub-frames:
Way 1: the length of an auxiliary demodulation sequence is one sub-frame, and each of the subsequent sub-frames directly repeats the first sub-frame.
Way 2: the time domain length of one auxiliary demodulation sequence is the given length of multiple sub-frames, namely, the multiple sub-frames share one CP.

The second part only transmits the target data, or transmits a few number of DMRS symbols. In the multiple sub-frames, the frequency domain location of the target data is the same or is determined by adopting a frequency hopping way. The specific size and location of the frequency domain resources are given in the UL grant.

The case where the data location is fixed is described below in detail. The specific transmitting way for the data channel is: the first part of the data channel transmits the auxiliary demodulation sequences of M sub-frames, and the second part of the data channel continuously transmits the target data of K sub-frames. The transmitting way is that data is transmitted by the triggering of a signalling.

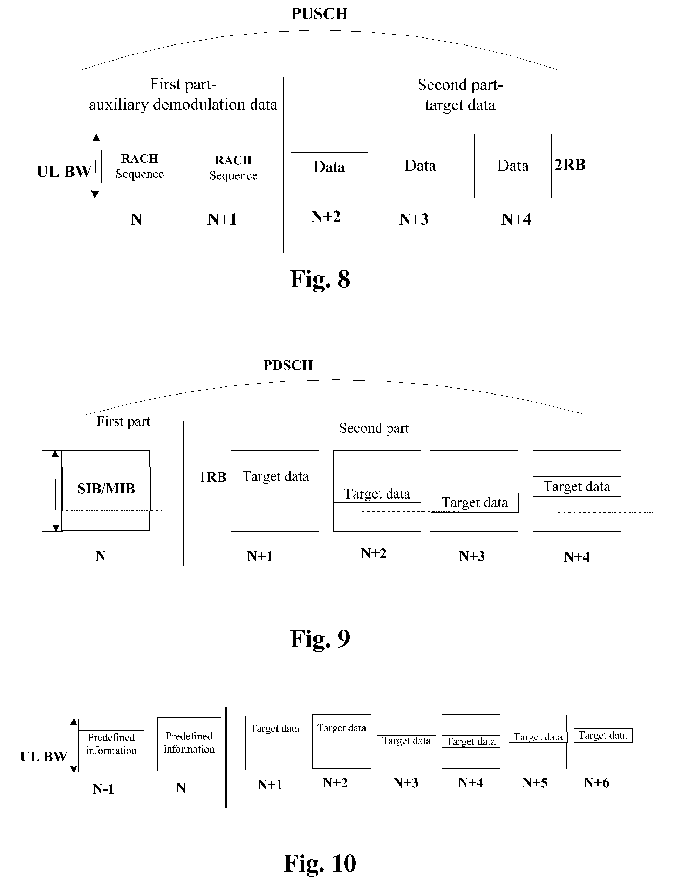

As shown in Fig. 8, the auxiliary demodulation data of the first part included in the uplink data channel PUSCH transmits two sub-frames repeatedly, namely, the former two sub-frames transmit the same auxiliary demodulation data, wherein the used auxiliary demodulation data is an RACH permeable sequence. The second part transmits the target data of three sub-frames, each of the three sub-frames bears the same data packet, and the target data of each sub-frame has the same frequency domain location.

The length of the RACH sequence used in the first part is determined according to the size and location of resources allocated for transmitting the target data in the second part and is consistent with that of the second part. For example, the UL grant allocates two RBs to a user, namely, each of the three sub-frames of the second part includes two RBs, and the specific frequency domain location is given here. In such a case, the length of the RACH sequence used by the first sub-frame should be 24 (provided that a continuous sub-carrier mapping way is still adopted here), and the frequency domain location of the sub-frame is consistent with that of the subsequent sub-frames. The time domain length of the sequence may be one sub-frame, and the second sub-frame repeats the first sub-frame; or, the time domain length of the sequence is 2 sub-frames, namely, two sub-frames share one CP.

A receiving end estimates a channel according to a received real permeable sequence and a known preamble sequence, performs coherence demodulation on the received target data of the three sub-frames of the second part according to the information of corresponding frequency domain location of the estimated channel based on the characteristics of slow change of the channel, and finally, accumulates the demodulated data to improve the coverage.

### Embodiment 5

In the embodiment, a circumstance that the first part of the downlink data channel PDSCH is auxiliary demodulation data, the second part of the downlink data channel PDSCH transmits target data, and an inter-sub-frame frequency hopping way is adopted in a TDD system is described here.

Under this circumstance, the structure and the transmission way of the downlink data channel are as shown in Fig. 9.

The first part contains one sub-frame, and the auxiliary demodulation data may be an SIB/MIB message which has been detected by a terminal, i.e., the information known by the terminal. The first part only contains one sub-frame and does not adopt a frequency hopping way. The second part contains four sub-frames and adopts an inter-sub-frame frequency hopping way, namely, the frequency domain location of each sub-frame is variable. The inter-sub-frame frequency hopping way is pre-defined or notified by a signalling.

The frequency domain location of the SIB/MIB is implicitly determined according to the size of frequency domain range of the subsequent four sub-frames. The frequency domain range of all the sub-frames of the target data is at least covered, as shown in Fig. 9. The length of the data is determined according to the frequency domain range.

After receiving the downlink data channel, the terminal performs channel estimation according to the data of the first part received currently and the correct SIB or MIB message detected previously to estimate the channel coefficients of the frequency domain locations of all the subsequent sub-frames. Then, data demodulation is performed on each subsequent sub-frame. In this way, the channel estimation process does not need to be performed for each sub-frame.

### Embodiment 6

In the embodiment, the circumstance that a first part of a downlink data channel contains auxiliary demodulation data, and the target data of a second part adopts a frequency hopping way in an FDD system is described here.

Here, the frequency hopping granularity increases to multiple sub-frames, namely, multiple sub-frames are bound for frequency hopping. In addition, the auxiliary demodulation data may also occupy multiple sub-frames.

As shown in Fig. 10, the auxiliary demodulation data of the first part may be a pre-defined information block, i.e., information already known by a receiving end. In addition, the information block is repeatedly transmitted on two sub-frames, namely, the each sub-frame bears the same information. The frequency domain location of the auxiliary demodulation data covers the frequency domain range of all the subsequent sub-frames of the target data. The second part contains six sub-frames each of which bears the same data packet, wherein the frequency domain locations of each two continuous sub-frames are the same; and frequency hopping is carried out in the third and the fifth sub-frames.

After receiving the downlink data channel, the terminal performs channel estimation according to the previous known information block and the data of the first part received currently to estimate the channel coefficients of the frequency domain locations of all the subsequent sub-frames. Then, data demodulation is performed on each of the subsequent sub-frames. In this way, channel estimation gain and diversity gain can be achieved at the same time.

### Embodiment 7

In the embodiment, the circumstance that a first part of an uplink data channel contains auxiliary demodulation data, and target data of a second part adopts a frequency hopping way in an FDD system is described here.

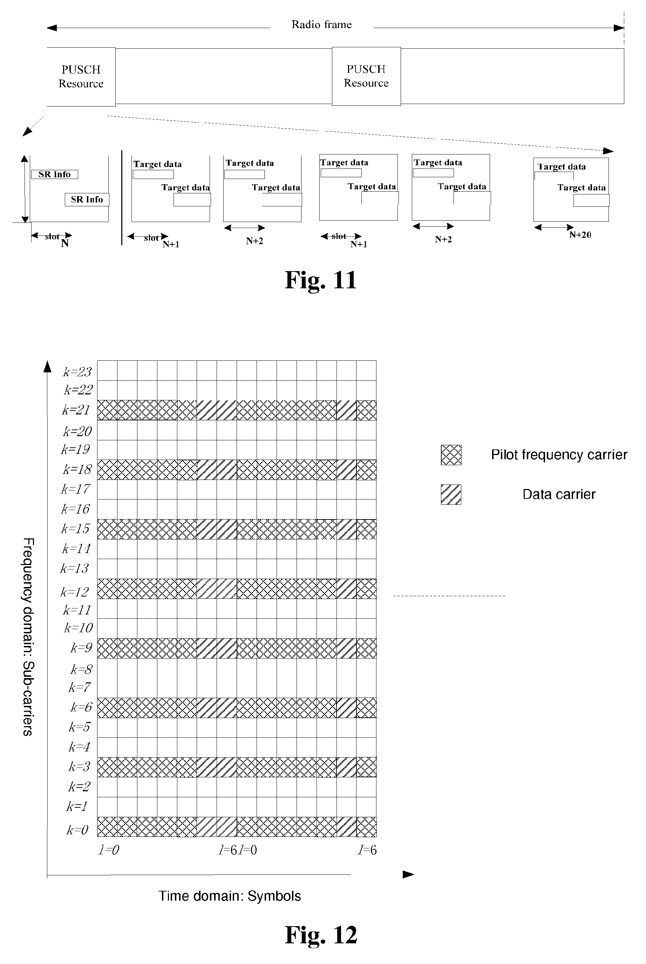

As shown in Fig. 11, here, the target data adopts an intra-time-slot frequency hopping way, and the auxiliary demodulation data in the first part also adopts an intra-time-slot frequency hopping way, and the frequency hopping manner is consistent with that of the data of the second part. The auxiliary demodulation data is an SR (Scheduling Request) sequence. The second part contains 20 sub-frames, and each sub-frame bears the same data packet.

The frequency hopping may also be implemented in a predefined way or in a way of notifying a specific frequency domain location by a signalling.

The transmission may be carried out repeatedly and periodically, i.e., transmission is carried out at intervals, as shown in Fig. 11.

After receiving the uplink data channel, the base station performs channel estimation according to the previous known scheduling request information and the received data of the first part to estimate the channel coefficient of a corresponding frequency domain location. Then, the base station demodulates data for the subsequent 20 sub-frames and accumulates and decodes the demodulated results.

### Embodiment 8

In the embodiment, the implementation that a base station configures, to a terminal, a sequence or training data for transmitting auxiliary demodulation data, and a specific way of notifying some information such as the number of sub-frames contained in each part are described.

The base station notifies the terminal of the related configuration information and scheduling information for transmitting the data channel in one of the following ways.

Way 1: the related configuration information and scheduling information for transmitting the data channel are notified by a physical signalling.

For the way for transmitting a data channel in the embodiment of the present disclosure, a new DCI format, e.g., format0X, may be defined to indicate the transmission information of multiple sub-frames.

Way 2: the related configuration information and scheduling information for transmitting the data channel are notified by a high-layer signalling.

Way 3: The number of sub-frames contained in each part and the used sequence are determined according to PRACH information.

For example, a root sequence used by the PRACH may be directly used as auxiliary demodulation data at uplink, but the length of the sequence is determined according to frequency domain resources. Or, a signalling indicates the frequency domain resource location of the first part, and each sub-frame of the second part is implicitly determined according to the resources of the first part.

### Embodiment 9

In the embodiment, the sub-carrier mapping ways for the transmitted pilot frequency, auxiliary demodulation data and target data are described. The mapping ways may be one of the following ways:
Way 1: the transmitted pilot frequency, auxiliary demodulation data and target data are mapped to continuous sub-carriers.
Way 2: the transmitted pilot frequency, auxiliary demodulation data and target data are mapped to sub-carriers at an equal interval, wherein the interval between the sub-carriers is determined by a pre-defined way or a signalling notification way. The interval is the divisor of 12 in the example embodiment, such as 1, 2, 3, 4 and 6.

For example, the resource mapping structure of one sub-frame of the uplink data channel is as shown in Fig. 12. The sub-frame is configured with a Normal CP, the UE is allocated with continuous two RBs, and the interval between the sub-carriers is notified to be 3 by a signalling, then the UE can only send data on the sub-carriers 0, 3, 6, 9, 12, 15, 18 and 21 (namely, the interval between the sub-carriers is 45kHz).

Although a mapping example of only one sub-frame is given here, the structure of all the sub-carriers contained in the data channels in embodiments 1-8, such as the pilot frequency, the auxiliary demodulation data and the transmitted target data, may adopt the inter-sub-carrier mapping way as shown in Fig. 12.

The pilot frequency, the auxiliary demodulation data and the transmitted target data are mapped to corresponding sub-carriers firstly in the frequency domain and then in the time domain.

The mapping at an interval of one or more sub-carriers can enhance suppression to frequency offset influence; moreover, the timing error requirement of a receiver can be reduced greatly, and more users can be supported in a frequency division multiplexing manner.

### Embodiment 10

In the embodiment, the resource mapping condition of one sub-frame of a downlink data channel is described.

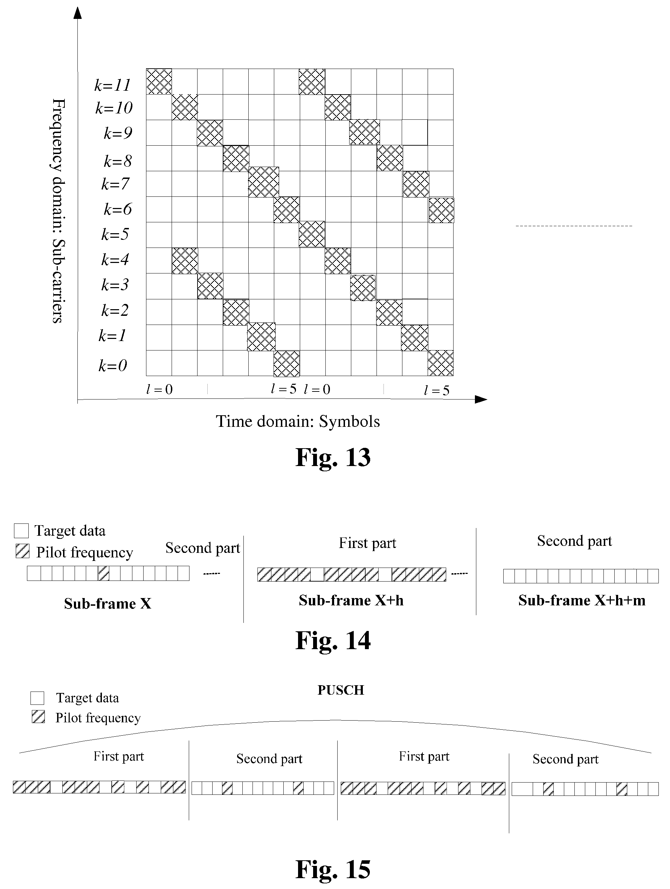

As shown in Fig. 13, one sub-frame with an extended CP is taken as an example. The sub-carrier interval for mapping the pilot frequency and the data of each sub-frame of the downlink data channel is 6, namely, the sub-carrier interval is 90kHz. Namely, the pilot frequency and the data are mapped to one modulation symbol at an interval of six sub-carriers. In addition, two symbols adjacent on the time domain are staggered. The pilot frequency and the data are mapped to corresponding sub-carriers firstly in the frequency domain and then in the time domain.

It should be noted that the lengths of the corresponding pilot frequency and auxiliary demodulation data are determined according to a mapping way if a discontinuous sub-carrier mapping way is adopted. For example, only one PRB is allocated to a UE, provided that the sub-carrier mapping interval is 2, if a pilot frequency sequence is adopted for channel estimation, then the length of the pilot frequency sequence is 6. However, there is no pilot frequency of which the length is 6 in the current standard. The solution is that: a pilot frequency sequence of a corresponding length is re-designed or the auxiliary demodulation data of which the length is able to be configured flexibly is adopted. If the pilot frequency has to be used, it can be stipulated that the smallest number of allocated PRBs should be more than or equal to the number of sub-carriers contained in the sub-carrier interval.

### Embodiment 11

In the embodiment, the periodicity of the transmitting method for a data channel is described.

The data channel may be transmitted automatically and repeatedly according to a pre-defined period. The number of sub-frames contained by each part in each period and the configuration of the pilot frequency and the data are pre-defined, and the transmission configuration parameter of the data packet is also fixed. For a periodically-reporting service in the MTC, the transmission interval of the transmission way may be defined according to a service period. For example, the service reporting period is 5s, each report may use 20 continuous or discontinuous sub-frames, with every 10 sub-frames being one period; and in the 10 sub-frames, the first part contains two sub-frames, namely, the target data of the following second part occupies 8 sub-frames.

In addition, the transmission way may be configured semi-statically; for example, the data channel is transmitted according to a pre-defined number of sub-frames and a pre-defined structure every time a triggering signalling is received.

Or, the transmission way may be dynamically scheduled, for example, the data channel is transmitted by the triggering of a physical signalling or a high-layer signalling, thus, the configuration and structure of the sub-frames may be different. For example, for a non-periodically and unexpectedly reported service in MTC, the base station may flexibly configure the transmission via a signalling.

As seen from what described above, the embodiments of the present disclosure have the following beneficial effects: joint channel estimation is performed according to the pilot frequency and auxiliary demodulation data sent by the first part and the pilot frequency in the sub-frames bearing the target data of the second part, the problem of inaccuracy of channel estimation of a service channel in a low SINR is solved. Furthermore, by transmitting the target data repeatedly on multiple continuous unit frames, the coverage of a relatively static MTC terminal data channel is improved, and the normal communication with the network is ensured.

To be described simply, a case where the first part is located before the second part is described in the embodiment, but other position relationships are not excluded. The first part and the second part may be in multiple position relationships, for example, the second part is located before the first part, or, the second part is located between two first parts, or, the first parts and the second parts are located alternately at an equal or unequal interval. Figs. 14 and 15 shows some examples, and the specific application has many forms and is not limited to the circumstances in Figs. 14 and 15.

In another embodiment, software is further provided, which is configured to execute the technical solutions described in the embodiments and example embodiments above.

In another embodiment, a storage medium is further provided, in which the software is stored. The storage medium includes but is not limited to a compact disk, a floppy disk, a hard disk, an erasable memory and the like.

Obviously, those skilled in the art shall understand that the components or steps of the present disclosure may be implemented by general computing apparatus and centralized in a single computing apparatus or distributed in a network consisting of multiple computing apparatus. Optionally, the components or steps may be implemented by program codes executable by the computing apparatus, so that they may be stored in a storage apparatus and executed by the computing apparatus, and, in some cases, the steps can be executed in a sequence different from the illustrated or described sequence, or they are respectively made into the integrated circuit components or many of them are made into a single integrated circuit component. By doing so, the present disclosure is not limited to any specific combination of hardware and software.

The above are only example embodiments of the present disclosure and not intended to limit the present disclosure. For those skilled in the art, various modifications and changes can be made in the present disclosure. Any modifications, equivalent replacements, improvements and the like within the principle of the present disclosure shall fall within the scope of protection defined by the claims of the present disclosure.

### Industrial Applicability

The technical solutions provided by the embodiments of the present disclosure can be applied to the processes of transmitting and receiving the data channel. By the technical solution that the data channel is divided into two parts, the channel estimation information of the first part is compensated and calibrated according to the channel estimation information of the second part or the data transmitted by the second part is demodulated according to the channel estimation information of the first part, the technical problems that the accuracy of channel estimation is low if the original uplink and downlink data transmission way is adopted, the coverage performance is relatively low and the like are solved, and the accuracy of the coherence demodulation of the target data at the receiving end is ensured and the coverage performance of the data channel is improved.

## Claims

1. A transmitting method for a data channel, which is applied to a base station and comprises:
acquiring data to be transmitted;
transmitting, on multiple sub-frames, the data to be transmitted born by the data channel, wherein the data channel at least comprises two parts, and the number of pilot frequency symbols contained in the first part is larger than the number of pilot frequency symbols contained in the second part; and/or, the first part is used for transmitting auxiliary demodulation data and the second part is used for transmitting target data.

2. The method according to claim 1, wherein in the first part, the proportion of resources occupied by pilot frequency and data is not less than a preset threshold; and in the second part, the proportion of resources occupied by pilot frequency and data is less than the preset threshold.

3. The method according to claim 2, wherein the proportion of resources occupied by the pilot frequency and the data contained in the first part and/or the proportion of resources occupied by the pilot frequency and the data contained in the second part is determined in one of the following ways:
a signalling configuration way, a predefined way, or a way of determination according to a Physical Random Access Channel, PRACH, format.

4. The method according to claim 1, wherein a frequency domain location of the auxiliary demodulation data is indicated by a signalling or is determined according to a frequency domain location of the target data.

5. The method according to claim 1, wherein
the number of Orthogonal Frequency Division Multiplexing, OFDM, symbols for bearing pilot frequency comprised in the second part is 0; or
N sub-frames comprise k OFDM symbols for bearing pilot frequency, where 0<k<=N, and N is the number of sub-frames for bearing the second part; or,
each sub-frame in N sub-frames comprises two OFDM symbols for bearing pilot frequency; or,
each sub-frame in N sub-frames comprises four OFDM symbols for bearing pilot frequency.

6. The method according to claim 1, wherein pilot frequency symbols of the data channel are transmitted in a time division multiplexing way.

7. The method according to claim 6, wherein the pilot frequency symbols of the data channel are transmitted in the time domain multiplexing way according to one of the following ways:
each OFDM symbol corresponds to one pilot frequency sequence; each time slot corresponds to one pilot frequency sequence; and one or more sub-frames correspond to one pilot frequency sequence.

8. The method according to claim 1, wherein the auxiliary demodulation data is determined in the following way:
a transmitting end and a receiving end appointing to adopt designated information as the auxiliary demodulation data.

9. The method according to claim 8, wherein the auxiliary demodulation data comprises at least one of the followings:
uplink and downlink pilot frequency sequences, a System Information Block, SIB/ Main Information Block, MIB, a synchronous signal, PRACH information, scheduling request information and a predefined information block.

10. The method according to claim 1, wherein multiple sub-frames for bearing the first part bear the same auxiliary demodulation data; or, each sub-frame in the multiple sub-frames for bearing the first part bears one part of the auxiliary demodulation data.

11. The method according to claim 1, wherein a frequency domain location of the target data is indicated by a signalling or is determined according to a frequency domain location for transmitting the auxiliary demodulation data.

12. The method according to claim 1, wherein before the data to be transmitted born by the data channel is transmitted on multiple sub-frames, the method further comprises:
mapping the data to be transmitted born by the data channel to continuous subcarriers or subcarriers at an equal interval.

13. The method according to claim 1, wherein a frequency domain location of each sub-frame in the multiple sub-frames is determined in one of the following ways:
a predefined way, and a frequency hopping way indicated by a signalling.

14. The method according to claim 13, wherein the frequency hopping corresponding to the frequency hopping way is frequency hopping of K bound sub-frames, where 1<K<N/2, K is an integer and N is the number of sub-frames for bearing the second part.

15. The method according to claim 1, wherein the number of sub-frames contained in the first part and the number of sub-frames contained in the second part are determined in one of the following ways:
the numbers are notified by a signalling or are determined according to a PRACH.

16. A receiving processing method for a data channel, which is applied to a terminal and comprises:
acquiring a configuration rule for the data channel, wherein the configuration rule comprises: the data channel at least contains two parts, the number of pilot frequency symbols contained in the first part is larger than the number of pilot frequency symbols contained in the second part; and/or, the first part is used for transmitting auxiliary demodulation data and the second part is used for transmitting target data; and
receiving, on multiple sub-frames according to the configuration rule, data to be transmitted born by the data channel.

17. The method according to claim 16, wherein in the first part, the proportion of resources occupied by pilot frequency and data is not less than a preset threshold; and in the second part, the proportion of resources occupied by pilot frequency and data is less than the preset threshold.

18. The method according to claim 17, wherein the proportion of resources occupied by the pilot frequency and the data contained in the first part and/or the proportion of resources occupied by the pilot frequency and the data contained in the second part is determined in one of the following ways:
a signalling configuration way, a predefined way, and a Physical Random Access Channel, PRACH, format.

19. The method according to claim 16, wherein a frequency domain location of the auxiliary demodulation data is indicated by a signalling or is determined according to a frequency domain location of the target data.

20. The method according to claim 16, wherein
the number of Orthogonal Frequency Division Multiplexing, OFDM, symbols for bearing pilot frequency comprised in the second part is 0; or
N sub-frames comprise k OFDM symbols for bearing pilot frequency, where 0<k<=N, and N is the number of sub-frames for bearing the second part; or,
each sub-frame in N sub-frames comprises two OFDM symbols for bearing pilot frequency; or,
each sub-frame in N sub-frames comprises four OFDM symbols for bearing pilot frequency.

21. The method according to claim 16, wherein pilot frequency symbols of the data channel are transmitted in a time division multiplexing way.

22. The method according to claim 21, wherein the pilot frequency symbols of the data channel are transmitted in the time domain multiplexing way according to one of the following ways:
each OFDM symbol corresponds to one pilot frequency sequence; each time slot corresponds to one pilot frequency sequence; and one or more sub-frames correspond to one pilot frequency sequence.

23. The method according to claim 16, wherein the auxiliary demodulation data is determined in the following way:
a transmitting end and a receiving end appointing to adopt designated information as the auxiliary demodulation data.

24. The method according to claim 23, wherein the auxiliary demodulation data comprises at least one of the followings:
uplink and downlink pilot frequency sequences, a System Information Block, SIB/ Main Information Block, MIB, a synchronous signal, PRACH information, scheduling request information and a predefined information block.

25. The method according to claim 16, wherein multiple sub-frames for bearing the first part bear the same auxiliary demodulation data; or, each sub-frame in the multiple sub-frames for bearing the first part bears one part of the auxiliary demodulation data.

26. The method according to claim 16, wherein a frequency domain location of the target data is indicated by a signalling or is determined according to a frequency domain location for transmitting the auxiliary demodulation data.

27. The method according to claim 16, wherein before the data born by the data channel is transmitted on multiple sub-frames, the method further comprises:
mapping the data born by the data channel to continuous subcarriers or subcarriers at an equal interval.

28. The method according to claim 16, wherein a frequency domain location of each sub-frame in the multiple sub-frames is determined in one of the following ways:
a predefined way, and a frequency hopping way indicated by a signalling.

29. The method according to claim 28, wherein the frequency hopping corresponding to the frequency hopping way is frequency hopping of K bound sub-frames, where 1<K<N/2, K is an integer and N is the number of sub-frames for bearing the second part.

30. The method according to claim 16, wherein the number of sub-frames contained in the first part and the number of sub-frames contained in the second part are determined in one of the following ways:
the numbers are notified by a signalling or are determined according to a PRACH.

31. The method according to any one of claims 16 to 20, wherein the data born by the data channel comprises: uplink data or downlink data.

32. A transmitting apparatus for a data channel, which is applied to a base station and comprises:
an acquiring component, which is configured to acquire data to be transmitted; and
a transmitting component, which is configured to transmit, on multiple sub-frames, the data to be transmitted born by the data channel, wherein the data channel at least comprises two parts, and the number of pilot frequency symbols contained in the first part is larger than the number of pilot frequency symbols contained in the second part; and/or, the first part is used for transmitting auxiliary demodulation data and the second part is used for transmitting target data.

33. A receiving processing apparatus for a data channel, which is applied to a terminal and comprises:
an acquiring component, which is configured to acquire a configuration rule for the data channel, wherein the configuration rule comprises: the data channel at least contains two parts, the number of pilot frequency symbols contained in the first part is larger than the number of pilot frequency symbols contained in the second part; and/or, the first part is used for transmitting auxiliary demodulation data and the second part is used for transmitting target data; and
a receiving component, which is configured to receive, on multiple sub-frames according to the configuration rule, data to be transmitted born by the data channel.
